# EUROPEAN PATENT SPECIFICATION

(11) **EP 0 816 300 B1**
(45) Date of publication and mention of the grant of the patent: **27.03.2002**
(21) Application number: 97304732.7
(22) Date of filing: 30.06.1997
(51) Int. Cl.: C04B 28/04, E21B 33/13, C04B 14/06, C04B 18/14

(54) **Well cement compositions**
Bohrlochzementzusammensetzung
Composition de cimentation de puits

(30) Priority: 01.07.1996 US 673987; 17.04.1997 US 839839; 03.06.1997 US 868223
(43) Date of publication of application: 07.01.1998
(73) Proprietor: Halliburton Energy Services, Inc., Duncan, Oklahoma 73536 (US)
(72) Inventor: Chatterji, Jiten, Duncan, Oklahoma 73533 (US); Totten, Patty L., Ducan, Oklahoma 73533 (US); King, Bobby J., Duncan, Oklahoma 73533 (US); Onan, David D., Lawton, Oklahoma 73537 (US)
(74) Representative: Wain, Christopher Paul

(56) References cited:
- EP-A- 0 314 242
- EP-A- 0 449 360
- US-A- 4 385 935
- US-A- 5 133 409
- US-A- 5 207 832
- US-A- 5 484 019
- SMITH T ET AL: "LIGHT, STRONG FOAMED CEMENT: A NEW TOOL FOR PROBLEM WELLS" WORLD OIL, vol. 198, no. 6, May 1984, pages 135-144, XP002024854

## Description

The present invention relates generally to the cementing of subterranean wells, and, more particularly, to cement compositions which set into resilient solid masses.

Hydraulic cement compositions are commonly utilized in subterranean well completion and remedial operations. For example, hydraulic cement compositions are used in primary cementing operations whereby pipes such as casings and liners are cemented in well bores. In performing primary cementing, a hydraulic cement composition is pumped into the annular space between the walls of the well bore and the exterior surfaces of pipe disposed therein. The cement composition is permitted to set in the annular space thereby forming an annular sheath of hardened substantially impermeable cement therein. The cement sheath physically supports and positions the pipe in the well bore and bonds the exterior surfaces of the pipe to the walls of the well bore whereby the undesirable migration of fluids between zones or formations penetrated by the well bore is prevented. The cement compositions utilized in primary cementing must often be lightweight to prevent excessive hydrostatic pressures from being exerted on formations penetrated by well bores.

The transition time of a well cement composition is the time after its placement in a subterranean zone penetrated by a well bore during which the cement composition changes from a true fluid to a hard set mass. During the transition time, the cement composition becomes partially self-supporting which lowers the hydrostatic pressure exerted by the cement composition on formations containing pressurized fluid penetrated by the well bore. That is, when the cement composition becomes partially self-supporting, volume reductions in the cement composition caused by fluid loss to adjacent formations and hydration of the cement result in rapid decreases in the hydrostatic pressure exerted by the cement composition. When the fluid phase within the cement matrix is not compressible and the pressure exerted by the cement composition falls below the pressure of formation fluids, the formation fluids enter the annulus and flow through the cement composition forming undesirable flow passages which remain after the cement composition sets. The use of a highly compressible fluid component, like gas, in the cement composition improves the composition's ability to maintain pressure and thus prevents the flow of formation fluids into and/or through the cement composition.

The development of wells including one or more laterals to increase production has recently taken place. Such multi-lateral wells include vertical or deviated (including horizontal) principal well bores having one or more ancillary laterally extending well bores connected thereto. Drilling and completion equipment has been developed which allows multiple laterals to be drilled from a principal cased and cemented well bore. Each of the lateral well bores can include a liner cemented therein which is tied into the principal well bore. The lateral well bores can be vertical or deviated and can be drilled into predetermined producing formations or zones at any time in the productive life cycle of the well.

In both conventional single bore wells and multi-lateral wells having several bores, the cement composition utilized for cementing casing or liners in the well bores must develop high bond strength after setting and also have sufficient resiliency, i.e., elasticity and ductility, to resist loss of pipe or formation bond, cracking and/or shattering as a result of pipe movement, impacts and/or shocks subsequently generated by drilling and other well operations. The bond loss, cracking and/or shattering of the set cement allows leakage of formation fluids through at least portions of the well bore or bores which can be highly detrimental.

Set cement in wells, and particularly the set cement forming the cement sheaths in the annuli between pipes and the walls of well bores, often fail due to shear and compressional stresses exerted on the set cement. Such stress conditions are commonly the result of relatively high fluid pressures and/or temperatures inside pipe cemented in well bores during testing, perforating, fluid injection and/or fluid production. The high internal pipe pressure and/or temperature results in expansion of the pipe, both radially and longitudinally, which places stresses on the cement sheath causing it to crack or the bonds between the exterior surfaces of the pipe and/or the well bore walls and the cement sheath to fail in the form of loss of hydraulic seal.

Another condition results from exceedingly high pressures which occur inside the cement sheath due to the thermal expansion of fluids trapped within the cement sheath. This condition often occurs as a result of high temperature differentials created during the injection or production of high temperature fluids through the well bore, e.g., wells subjected to steam recovery or the production of hot formation fluids from high temperature formations. Typically, the pressure of the trapped fluids exceeds the collapse pressure of the cement and pipe causing leaks and bond failure. Yet another compressional stress condition occurs as a result of outside forces exerted on the cement sheath due to formation shifting and overburden pressures.

In multi-lateral wells wherein pipe has been cemented in well bores using conventional well cement slurries which set into brittle solid masses, the brittle set cement cannot withstand impacts and shocks subsequently generated by drilling and other well operations carried out in the multiple laterals without cracking or shattering.

The above described failures can result in loss of production, environmental pollution, hazardous rig operations and/or hazardous production operations. The most common hazard is the presence of gas pressure at the well head.

Thus, there are needs for well cement compositions and methods whereby after setting the cement compositions are highly resilient and can withstand the above described stresses without failure. That is, there is a need for well cement compositions and methods whereby the set cement has improved mechanical properties including elasticity and ductility and failures due to pipe movement, impacts and shocks are reduced or prevented.

We have now devised some resilient well cement compositions having improved mechanical properties including elasticity and ductility, which meet, or go towards meeting, the needs described above and overcome or mitigate the deficiencies of the prior art.

According to the present invention, there is provided a well cement composition having improved mechanical properties including elasticity and ductility and having a Young's modulus of no more than 0.026 x 10⁻⁶ psi, which composition comprises a hydraulic cement; fumed silica present in an amount of from 5% to 30% by weight of hydraulic cement in said composition; sufficient water to form a pumpable slurry; a gas present in an amount sufficient to foam said cement composition; an effective amount of a foaming agent; and an effective amount of a foam stabilizer.

Another well cement composition of this invention is comprised of a hydraulic cement, fumed silica present in an amount in the range of from about 5% to about 30% by weight of hydraulic cement in the composition, an aqueous rubber latex present in an amount present in the range of from about 2.5% to about 45% by weight of hydraulic cement in the composition, and effective amounts of a latex stabilizer, a defoaming agent, a gas, a foaming agent and a foam stabilizer. In addition to being highly resilient, this foamed cement composition is lightweight and contains a compressible gas whereby pressurized formation fluid migration through the setting cement is prevented.

Another foamed cement composition of this invention is comprised of a hydraulic cement, fumed silica present in an amount in the range of from about 5% to about 30% by weight of hydraulic cement in the composition, water present in an amount in the range of from about 22% to about 95% by weight of hydraulic cement in the composition, and effective amounts of a gas, a foaming agent and a foam stabilizer.

The methods of the invention basically comprise the steps of introducing a well cement composition of this invention which sets into a high bond strength, highly resilient solid mass having elasticity and ductility into a subterranean well and allowing the cement composition to set in the well.

The present invention provides resilient well cement compositions which are useful in a variety of well completion and remedial operations particularly in primary cementing, i.e. cementing casings and liners in well bores including the cementing of multi-lateral subterranean wells.

A variety of hydraulic cements can be utilized in accordance with the present invention including those comprised of calcium, aluminum, silicon, oxygen and/or sulfur which set and harden by reaction with water. Such hydraulic cements include Portland cements, pozzolana cements, gypsum cements, high aluminum content cements, silica cements and high alkalinity cements. Portland cements are generally preferred for use in accordance with the present invention. Portland cements of the types defined and described in API Specification For Materials And Testing For Well Cements, API Specification 10, 5th Edition, dated July 1, 1990 of the American Petroleum Institute are particularly suitable. Preferred API Portland cements include classes A, B, C, G and H, with API classes G and H being more preferred and class G being the most preferred.

Fumed silica is a colloidal form of silica made by the combustion of silicon tetrachloride in hydrogen-oxygen furnaces. Fumed silica is of a fine particle size, and in combination with the other components of the cement compositions of this invention provides improved mechanical properties to the compositions, particularly the ability to withstand a wide range of stresses associated with subterranean well conditions without bond loss, cracking, shattering or other form of failure. The term "fumed silica" is used herein to mean the fumed silica made as described above and equivalent forms of silica made in other ways.

The fumed silica is present in the above described composition of this invention in an amount in the range of from about 5% to about 30% by weight of the hydraulic cement in the composition (from about 4.5 to about 30 lb/sack), more preferably from about 7.5% to about 15% (from about 7 to about 14 lb/sack) and most preferably about 10% (about 9.4 lb/sack). As will be understood by those skilled in the art, the fumed silica reacts with lime and the like liberated by the hydraulic cement during hydration to form an amorphous metal silicate hydrate.

A variety of well known rubber materials can be utilized in accordance with the present invention. Such materials are commercially available in aqueous latex form, i.e., aqueous dispersions or emulsions. For example, natural rubber (cis-1,4-polyisoprene) and most of its modified types can be utilized. Synthetic polymers of various types can also be used including styrene/butadiene rubber, cis-1,4-polybutadiene rubber and blends thereof with natural rubber or styrene/butadiene rubber, high styrene resin, butyl rubber, ethylene/propylene rubbers, neoprene rubber, nitrile rubber, cis-1,4-polyisoprene rubber, silicone rubber, chlorosulfonated rubber, polyethylene rubber, epichlorohydrin rubber, fluorocarbon rubber, fluorosilicone rubber, polyurethane rubber, polyacrylic rubber and polysulfide rubber.

Of the various latexes which can be utilized, those prepared by emulsion polymerization processes are preferred. A particularly preferred latex for use in accordance with this invention is a styrene/butadiene copolymer latex emulsion prepared by emulsion polymerization. The aqueous phase of the emulsion is an aqueous colloidal dispersion of the styrene/butadiene copolymer. The latex dispersion usually includes water in an amount in the range of from about 40% to about 70% by weight of the latex, and in addition to the dispersed styrene/butadiene particles, the latex often includes small quantities of an emulsifier, polymerization catalysts, chain modifying agents and the like. The weight ratio of styrene to butadiene in the latex can range from about 10%:90% to about 90%:10%.

It is understood that styrene/butadiene latexes are often commercially produced as terpolymer latexes which include up to about 3% by weight of a third monomer to assist in stabilizing the latex emulsions. The third monomer, when present, generally is anionic in character and includes a carboxylate, sulfate or sulfonate group. Other groups that may be present on the third monomer include phosphates, phosphonates or phenolics. Non-ionic groups which exhibit stearic effects and which contain long ethoxylate or hydrocarbon tails can also be present.

A particularly suitable styrene/butadiene aqueous latex has a styrene/butadiene weight ratio of about 25%:75%, and the styrene/butadiene copolymer is suspended in a 50% by weight aqueous emulsion. This styrene/butadiene aqueous latex in combination with the other components of the cement compositions of this invention provides excellent resiliency to a set cement composition without the appreciable loss of bond strength in the set cement. A latex of this type is available from Halliburton Energy Services of Duncan, Oklahoma under the trade designation "LATEX 2000™." The aqueous latex used is included in the cement compositions of this invention in an amount in the range of from about 2.5% to about 45% by weight of the hydraulic cement in the composition (from about 0.25 to about 5.0 gal/sack), more preferably from about 4.5% to about 22% (from about 0.5 to about 2.5 gal/sack) and most preferably about 9% (about 1 gal/sack).

In order to prevent the aqueous latex from prematurely coagulating and increasing the viscosity of the cement composition, an effective amount of a latex stabilizer is included in the cement composition. Latex stabilizers are comprised of one or more surfactants which function to prevent latex coagulation. Those which are particularly suitable for use in accordance with the present invention are surfactants having the formula

R - Ph - O ( O CH₂CH₂ )ₘ OH

wherein R is an alkyl group having from about 5 to about 30 carbon atoms, Ph is phenyl and m is an integer in the range of from about 5 to about 50, and surfactants of the general formula

R₁ ( OR₂ )ₙ SO₃X

wherein R₁ is selected from the group consisting of alkyl groups having from 1 to about 30 carbon atoms, cycloalkyl groups having 5 or 6 carbon atoms, C₁ - C₄ alkyl substituted cycloalkyl groups, phenyl, alkyl substituted phenyl of the general formula (R₃)ₐPh-wherein Ph is phenyl, R₃ is an alkyl group having from 1 to about 18 carbon atoms and a is an integer of from 1 to 3, and phenylalkyl groups wherein the alkyl groups have from 1 to about 18 carbon atoms and the phenyl-alkyl groups have a total of from about 8 to about 28 carbon atoms, R₂ is a substituted ethylene group of the formula -CH₂CH₂R₄ wherein R₄ is selected from hydrogen, methyl, ethyl or mixtures thereof, and n is a number from 0 to about 40 provided that when R₁ is phenyl or alkyl substituted phenyl n is at least one, and X is any compatible cation. A preferred surfactant in this group is ethoxylated nonylphenyl containing in the range of from about 20 to about 30 moles of ethylene oxide.

Another preferred surfactant in the group is a sodium salt having the general formula

R₅ - Ph ( OR₆ )ₒ SO₃ X

wherein R₅ is an alkyl group having in the range of from 1 to about 9 carbon atoms, R₆ is the group -CH₂CH₂-, o is an integer from about 10 to about 20 and X is a compatible cation.

Yet another preferred surfactant in the group is a sodium salt having the formula

R₇ ( O R₆ )ₚ SO₃ X

wherein R₇ is an alkyl group having in the range of from about 5 to about 20 carbon atoms, R₈ is the group -CH₂CH₂-, p is an integer in the range of from about 10 to about 40 and X is a compatible cation. A particularly preferred surfactant of this type is the sodium salt of a sulfonated compound derived by reacting a C₁₂ to C₁₅ alcohol with about 15 moles of ethylene oxide having the formula

H (CH₂ )₁₂₋₁₅ ( CH₂CH₂O )₁₅ SO₃ Na

which is commercially available under the name "AVANEL S150™" from PPG Mazer, Mazer Chemicals, a Division of PPG Industries, Inc., 3938 Porett Drive, Gurnee, Illinois 60031.

Of the various latex stabilizers described above which can be used, ethoxylated nonylphenol containing in the range of from about 15 to about 40 moles of ethylene oxide and the "AVANEL ™" series of surfactants, i.e., the sodium salt of a sulfonated and ethoxylated compound having the formula H (CH₂ )₁₂₋₁₅ ( CH₂CH₂O )₁₅₋ ₄₀ SO₃ Na are preferred, with H (CH₂ ) ₁₂₋₁₅ ( CH₂CH₂O ) ₁₅ SO₃ Na being the most preferred.

While different amounts of latex stabilizer are included in the cement composition depending on the particular aqueous rubber latex used, the latex stabilizer is usually included in the cement composition in an amount in the range of from about 9% to about 35% by weight of the aqueous rubber latex included therein (from about 0.02 to about 1.75 gal/sack of cement). When the aqueous latex is an aqueous styrene/butadiene latex, the latex stabilizer utilized is preferably included in the cement composition in an amount in the range of from about 9% to about 35% by weight of the aqueous rubber latex included in the composition (from about 0.02 to about 1.75 gal/sack of cement), more preferably from about 15% to about 25% (from about 0.04 to about 1.25 gal/sack) and most preferably about 20% (about 0.2 gal/sack).

While the water in the aqueous rubber latex used in forming the cement compositions of this invention which contain an aqueous rubber latex can be adequate for producing a pumpable slurry and hydrating the cementitious materials therein, additional water can be added to the compositions as required for pumpability. Also, water must be added to the compositions that do not include an aqueous rubber latex in an amount at least sufficient to form a pumpable slurry.

The water can be from any source provided it does not contain in excess of compounds that adversely affect other components in the cement compositions. For example, the water can contain various salts such as sodium, potassium and calcium chloride or the like. Generally, water is present in a cement slurry composition of this invention in an amount in the range of from about 22% to about 95% by weight of hydraulic cement therein (from about 2.5 to about 10.7 gal/sack).

A light weight, foamed, highly resilient well cement composition of this invention is comprised of a hydraulic cement of the type described above, fumed silica as described above present in an amount in the range of from about 5% to about 30% by weight of hydraulic cement in the composition (from about 4.5 to about 30 lb/sack), an aqueous rubber latex of the type described above present in an amount in the range of from about 2.5% to about 45% by weight of hydraulic cement in the composition (from about 0.25 to about 5.0 gal/sack), an effective amount of a latex stabilizer of the type described above, an effective amount of a defoaming agent, a compressible gas present in an amount sufficient to foam the composition and produce a density in the range of from about 8 pounds per US gallon to about 16 pounds per US gallon, an effective amount of a foaming agent and an effective amount of a foam stabilizer.

The defoaming agent prevents foaming during mixing of the cement composition prior to foaming the composition. That is, because the aqueous rubber latex includes surfactants for emulsifying the latex and latex stabilizer which also function as foaming agents, a large bubble, unstable foam is produced when the hydraulic cement and silica are mixed with the latex. The defoaming agent prevents the formation of the large bubble foam so that a small bubble stable foam can be subsequently formed. The defoaming agent can comprise any of the compounds well known for such capabilities such as the polyol silicon compounds. A preferred such defoaming agent is polydimethylsiloxane which is commercially available from Halliburton Energy Services of Duncan, Oklahoma, under the trade designation "D-AIR™." The defoaming agent is generally included in the cement composition in an amount in the range of from about 0.1% to about 0.9% by weight of the hydraulic cement therein (from about 0.01 to about 0.1 gal/sack), more preferably from about 0.18% to about 0.7% (from about 0.02 to about 0.08 gal/sack) and most preferably about 0.18% (about 0.02 gal/sack).

The compressible gas functions to foam the cement composition, to prevent pressurized formation fluid influx into the cement composition when setting and contributes to the resiliency of the set composition. The gas is preferably nitrogen or air, with nitrogen being the most preferred. Generally, the gas is present in an amount sufficient to foam the cement slurry and produce a slurry density in the range of from about 8 to about 16 pounds per US gallon, more preferably from about 12 to about 15 pounds per US gallon and most preferably about 13 pounds per US gallon. The amount of gas which is present in a foamed cement composition of this invention generally ranges from about 8.5% to about 50% by volume of the resulting foamed cement composition.

In order to facilitate foaming and to stabilize the foamed slurry, a foaming agent is included in the cement composition. Suitable foaming agents are surfactants having the general formula:

H(CH₂)ₐ(OC₂H₄)_{b}OSO₃X

wherein:
a is an integer in the range of from about 5 to about 15;
b is an integer in the range of from about 1 to about 10; and
X is any compatible cation.
A particularly preferred foaming agent is a surfactant of the above type having the formula:

H(CH₂)ₐ(OC₂H₄)₃OSO₃Na

wherein:
a is an integer in the range of from about 6 to about 10. This surfactant is commercially available from Halliburton Energy Services of Duncan, Oklahoma, under the trade designation "CFA-S™."

Another particularly preferred foaming agent of the above mentioned type is a surfactant having the formula:

H(CH₂)ₐ(OC₂H₄)_{b}OSO₃NH₄

wherein:
a is an integer in the range of from about 5 to about 15; and
b is an integer in the range of from about 1 to about 10.
This surfactant is available from Halliburton Energy Services under the trade name "HALLIBURTON FOAM ADDITIVE™."

Another foaming agent which can be utilized in the cement compositions of this invention includes polyethoxylated alcohols having the formula:

H(CH₂)ₐ(OC₂H₄)_{b}OH

wherein:
a is an integer in the range of from about 10 to about 18; and
b is an integer in the range of from about 6 to about 15.
This surfactant is available from Halliburton Energy Services under the trade name "AQF-1™."

Yet another foaming agent which can be used is a sodium salt of alpha-olefinic sulfonic acid (AOS) which is a mixture of compounds of the formulas:

X[H(CH₂)ₙ-C = C-(CH₂)ₘSO₃Na]

and

Y[H(CH₂)ₚ-COH-(CH₂)_{q}SO₃Na]

wherein:
n and m are individually integers in the range of from about 6 to about 16;
p and q are individually integers in the range of from about 7 to about 17;. and
X and Y are fractions with the sum of X and Y being 1.
This foaming agent is available from Halliburton Energy Services under the trade name "AQF-2™."

Still another foaming surfactant which can be used is an alcohol ether sulfate of the formula:

H(CH₂)ₐ(OC₂H₄)_{b}SO₃NH₄

wherein:
a is an integer in the range of from about 6 to about 10; and
b is an integer in the range of from about 3 to about 10.

The particular foaming agent employed will depend on various factors such as the types of formations in which the foamed cement is to be placed. Generally, the foaming agent utilized is included in a cement composition of this invention in an amount in the range of from about 1.5% to about 10% by weight of water in the composition. When the foaming agent is one of the preferred surfactants described above, it is included in the composition in an amount in the range of from about 4% to about 9.5% by weight of water therein.

A foam stabilizer is also included in the foamed cement composition to enhance the stability of the foamed cement slurry. One such foam stabilizing agent is a compound of the formula: 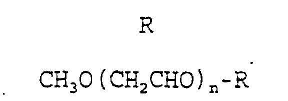 wherein:
R is hydrogen or a methyl radical; and
n is an integer in the range of from about 20 to about 200.

A particularly preferred foam stabilizing agent of the above type is a methoxypolyethylene glycol of the formula:

CH₃O(CH₂CH₂O)ₙCH₂OH

wherein:
n is in the range of from about 100 to about 150. This foam stabilizing agent is commercially available from Halliburton Energy Services under the trade designation "HALLIBURTON FOAM STABILIZER™."

The preferred foam stabilizing agent is a compound having the formula:

R-CONHCH₂CH₂CH₂N⁺(CH₃)₂CH₂CO₂⁻

wherein:
R is a C₁₀ to C₁₈ saturated aliphatic hydrocarbon group or an oleyl group or a linoleyl group.
A particularly preferred stabilizing agent of the above type is an amidopropylbetaine of the formula:

R-CONHCH₂CH₂CH₂N⁺(CH₃)₂CH₂CO₂⁻

wherein:
R is a cocoyl group.
This foam stabilizing agent is commercially available from Halliburton Energy Services under the trade designation "HC-2™."

The foam stabilizer is included in a cement composition of this invention in an amount in the range of from about 0.75% to about 5% by weight of water utilized. When the foam stabilizing agent is one of the particularly preferred agents described above, it is preferably present in the composition in an amount in the range of from about 2% to about 5% by weight of water.

Another lightweight, foamed, highly resilient well cement composition of this invention is comprised of a hydraulic cement of the type described above, fumed silica as described above present in an amount in the range of from about 5% to about 30% by weight of hydraulic cement in the composition (from about 4.5 to about 30 lb/sack), water present in an amount in the range of from about 22% to about 95% by weight of hydraulic cement in the composition (from about 2.5 gal/sack to about 10.7 gal/sack), a compressible gas present in an amount sufficient to foam the composition and produce a density in the range of from about 8 pounds per gallon to about 16 pounds per gallon, an effective amount of a foaming agent and an effective amount of a foam stabilizer.

This foamed cement composition does not include an aqueous rubber latex, but it has unexpected and surprisingly improved physical and mechanical properties including high degrees of elasticity and ductility and a high resistance to pressurized formation fluid migration.

The well cement compositions useful herein can include other additives which are well known to those skilled in the art including fluid loss control additives, set retarding additives, dispersing agents, formation conditioning additives, set accelerators and the like.

Dispersing agents can be utilized to facilitate the use of lower quantities of water and to promote higher set cement strength. A particularly suitable dispersing agent for use with the well cement compositions of this invention is comprised of the condensation polymer product of an aliphatic ketone, an aliphatic aldehyde and a compound which introduces acid groups into the polymer, e.g., sodium sulfite. Such a dispersant is described in U.S. Patent No. 4,557,763 issued to George et al. on December 10, 1985 to which reference should be made.

Examples of fluid loss control additives are cellulose derivatives such as carboxymethylhydroxyethylcellulose, hydroxyethylcellulose, modified polysaccharides, polyacrylamides, guar gum derivatives, 2-acrylamido-2-methylpropane sulfonic acid copolymers, polyethyleneamine and the like.

Set retarding additives are included in the cement compositions when it is necessary to extend the time in which the cement composition can be pumped so that it will not thicken or set prior to being placed at a desired location in the well being cemented. Examples of set retarders which can be used include lignosulfonates such as calcium and sodium lignosulfonate, organic acids such as tartaric acid and gluconic acid, copolymers and others. The proper amount of retarder required for particular conditions can be determined by conducting a "thickening time test" for the particular retarder and cement composition. Such tests are described in the API Specification For Materials and Testing for Well Cements, API Specification 10 mentioned above.

A particularly preferred set retarder for use in accordance with the present invention is a copolymer or copolymer salt of 2-acrylamido-2-methylpropanesulfonic acid and acrylic acid. The copolymer comprises from about 40 to about 60 mole percent 2-acrylamido-2-methylpropanesulfonic acid with the balance comprising acrylic acid, and the copolymer or salt preferably has an average molecular weight below about 5,000. This copolymer set retarder is preferably utilized in the composition when the bottom hole circulating temperature exceeds about 200°F. The retarder has been found to both retard the setting of the cement at elevated formation temperatures and to stabilize the aqueous styrene/butadiene latex against agglomeration or inversion at the elevated temperature. The set retarder is generally added to the cement composition in an amount in the range of from about 0.1% to about 6% by weight of hydraulic cement in the composition.

The cement compositions of this invention may be prepared in accordance with any of the well known mixing techniques so long as the latex and latex stabilizing surfactant are not directly admixed without prior dilution by other liquids present. In one preferred method, a quantity of water is introduced into a cement blender and defoamer, latex and latex stabilizer are then sequentially added with suitable agitation to disperse the constituents. Any other liquid additives may then be admixed with the slurry followed by the hydraulic cement, fumed silica and other dry solids. The mixture is agitated for a sufficient period of time to admix the components and form a pumpable non-foamed slurry. When the slurry is foamed, it is pumped to the well bore and the foaming agent and foam stabilizer followed by the gas are injected into the slurry on the fly. As the slurry and gas flow through the well bore to the location where the resulting foamed cement composition is to be placed, the cement composition is foamed and stabilized.

The methods of this invention for cementing a zone in a well basically comprise the steps of placing a cement composition of this invention which sets into a highly resilient, high bond strength, substantially impermeable mass in the subterranean zone to be cemented, and maintaining the cement composition in the zone for a time sufficient for the cement composition to set therein.

In order to further illustrate the improved cement compositions and methods of this invention, the following examples are given.

### Example 1

Test samples of foamed cement compositions of this invention comprised of hydraulic cement, fumed silica, an aqueous rubber latex, a latex stabilizer, a defoaming agent, air, a foaming agent and a foam stabilizer were prepared. One of the foamed cement compositions also included hemitite weighting material, 100 mesh sand, a set retarder and a retarder intensifier. For each test sample, an unfoamed cement slurry including the defoaming agent was first prepared utilizing a mixing device. A predetermined amount of the resulting slurry was then placed in a fixed volume blender jar having a stacked blade assembly. The foaming agent and foam stabilizer were then added to the jar and the contents were mixed at high speed. The high speed mixing by the stacked blade assembly caused the slurry to be foamed with air. Descriptions of the test samples are set forth in Table IIA below.

The foamed test samples were allowed to set for 1 week at 140°F and atmospheric pressure after which portions of the test samples were subjected to various tests to determine their properties. More specifically, shear and hydraulic bond strength tests were conducted in accordance with the procedures of Example 1, and unconfined uniaxial and confined triaxial strength tests were conducted and Young's Moduli (also known as moduli of elasticity) and Poisson's Ratios were determined as well as bulk compressibilities, shear moduli and tensile strengths, all in accordance with the standardized tests and procedures of the American Society for Testing and Materials (ASTM) set forth, for example, in ASTM Section D 1456. The results of the tests and determinations are set forth in Table IIB below.

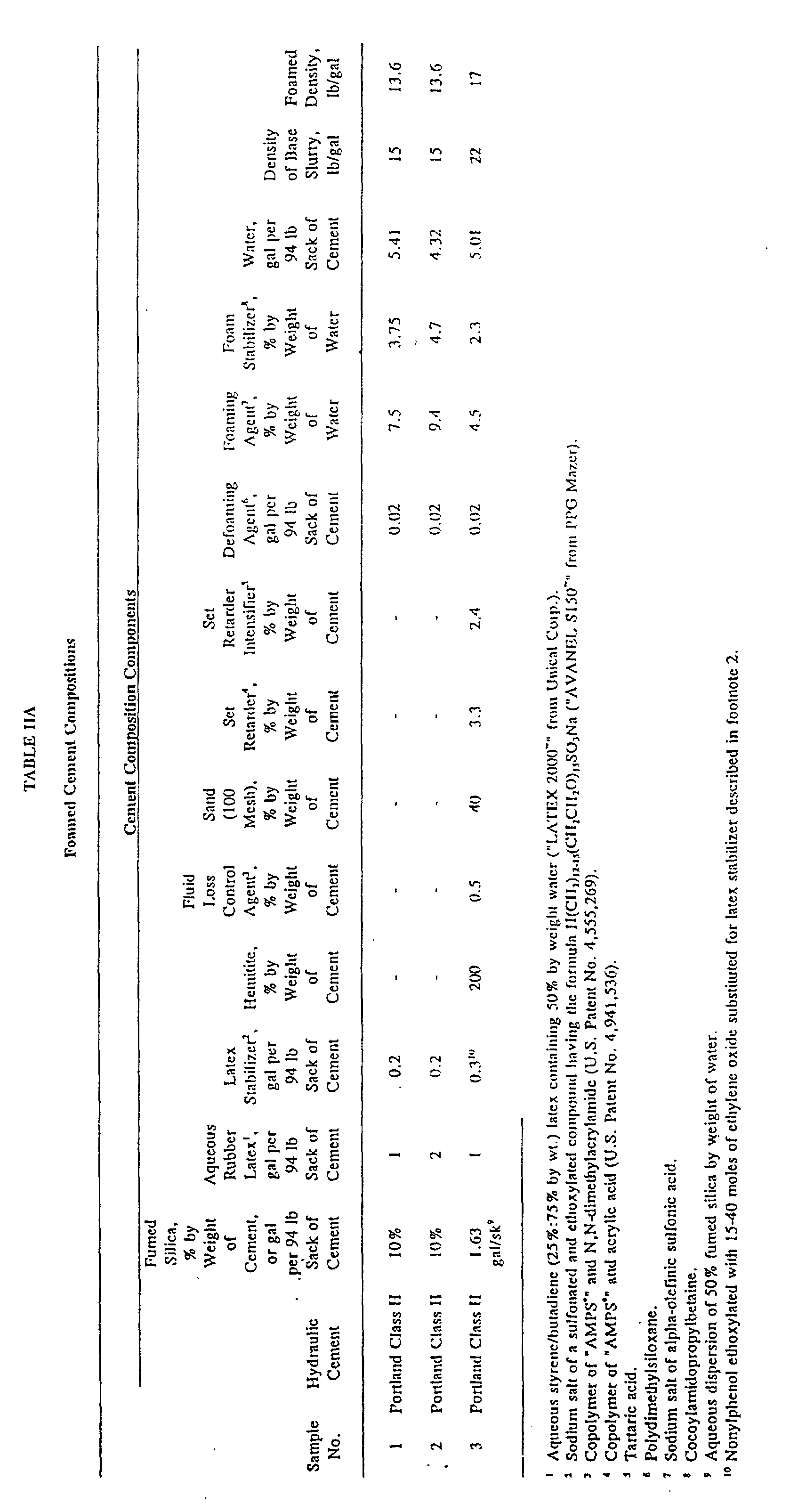

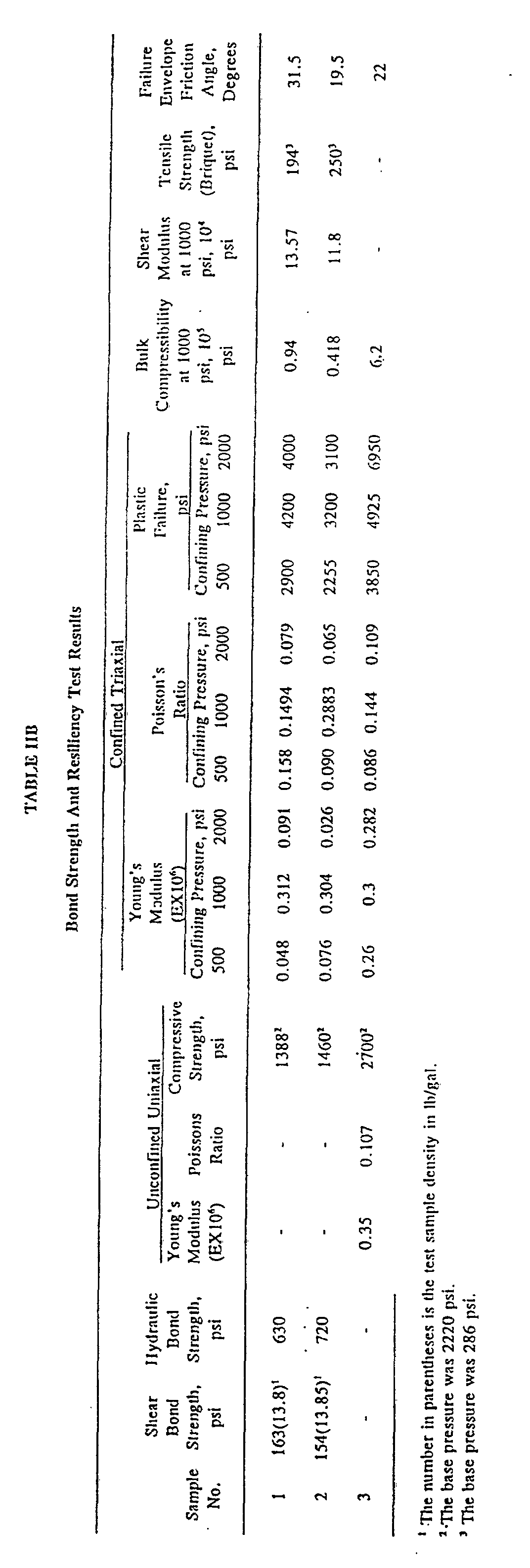

From the results set forth in Table IIB, it can be seen that the foamed cement compositions tested have excellent bond strengths and resiliencies.

### Example 2

Test samples of additional foamed cement compositions of this invention comprised of hydraulic cement, fumed silica, water, air, a foaming agent and a foam stabilizer were prepared. For each test sample, an unfoamed cement slurry was first prepared utilizing a mixing device. A predetermined amount of the resulting slurry was then placed in a fixed volume blender jar having a stacked blade assembly. The foaming agent and foam stabilizer were then added to the jar and the contents were mixed at high speed. The high speed mixing by the stacked blade assembly caused the slurry to be foamed with air. Descriptions of the test samples are set forth in Table IIIA below.

The foamed test samples were allowed to set for 6 days at 140°F in atmospheric pressure after which portions of the test samples were subjected to the various tests and determinations described in Example 2 above to determine their properties. The results of these tests and determinations are set forth in Table IIIB below.

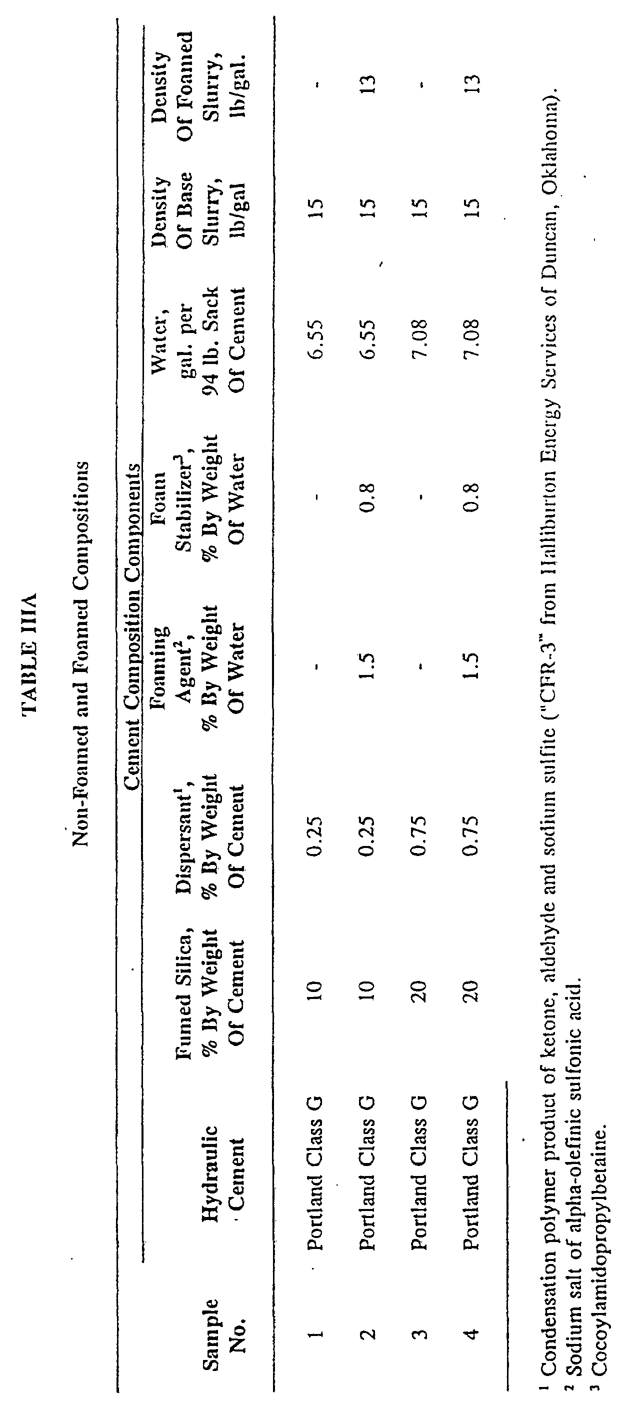

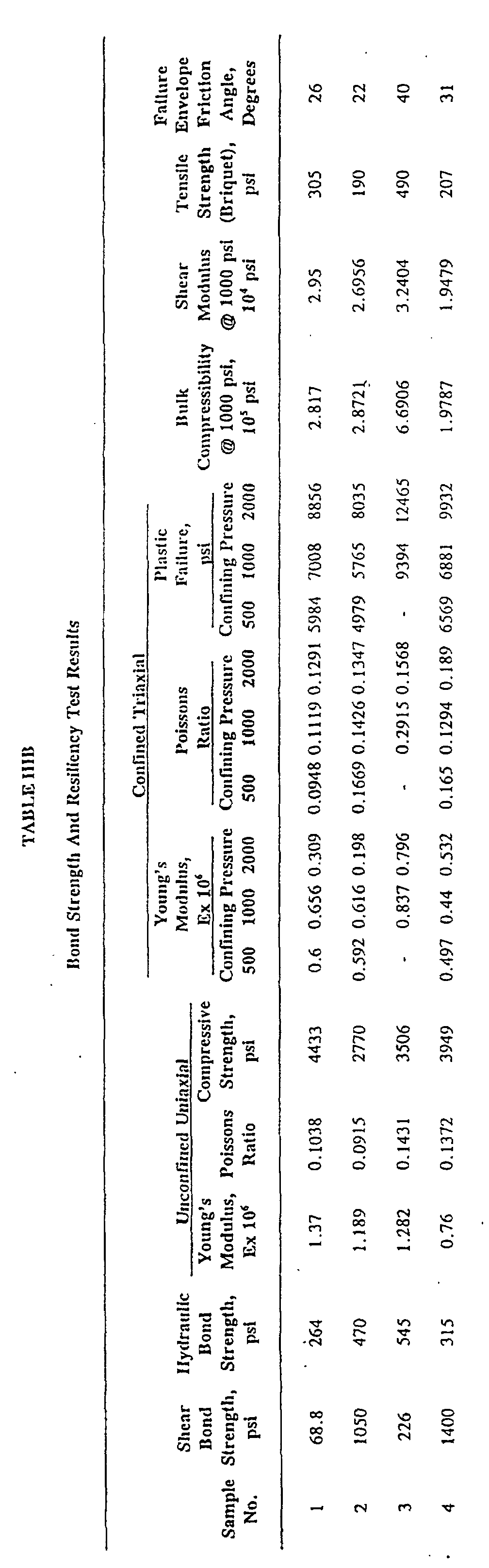

From the results set forth in Table IIIB, it can be seen that the foamed cement compositions comprised of hydraulic cement, fumed silica, water, air, foaming agent and foam stabilizer have unexpected and surprisingly improved ductility and resiliency properties as primarily shown by the Young's modulus test data.

### Example 3

Comparative tests were conducted between foamed cement compositions of this invention comprised of hydraulic cement, fumed silica, water, air, a foaming agent and a foam stabilizer and various lightweight unfoamed and foamed compositions of the prior art containing hydraulic cement, fumed silica and other components. The foamed compositions of this invention were prepared in the manner described in Example 2 above and are identified in Table IVA below as samples 1, 2, 3 and 4.

The prior art compositions tested are as follows:
A. The two 9.0 pound per US gallon unfoamed cement compositions described in Examples I and II of United States Patent No. 5,188,176 issued to Carpenter on February 23, 1993 comprised of water, hydraulic cement, fumed silica and fly ash microspheres. These compositions are described in Table IVA below and identified as samples 1a and 2a.
B. The 9.0 pound per US gallon unfoamed cement composition described in Example II of United States Patent No. 5,188,176 issued to Carpenter on February 23, 1993 comprised of water, hydraulic cement, fumed silica, dispersant, fly ash microspheres, styrene-butadiene latex, surfactant and defoamer. This composition is described in Table IVA below and identified as sample 3a.
C. The 9.0 pound per US gallon foamed cement composition described in Example 2 of United States Patent No. 4,927,462 issued to Sugama on May 22, 1990 comprised of water, hydraulic cement, fumed silica (substituted for silica flour - see col. 2, lines 43-55), treated chopped polypropylene fibers (substituted for carbon fibers - see col. 2, lines 63-66), air, a foaming agent and a foam stabilizer. This composition is described in Table IVA below and identified as sample 4a.

The unfoamed compositions were prepared using a conventional mixing device. The foamed composition was prepared in the manner described in Example 2 above.

The various test samples were allowed to set for 6 days at 140°F and atmospheric pressure after which portions of the test samples were subjected to a number of the tests and determinations described in Example 1 above to determine their properties, i.e., unconfined compressive strength tests, tensile strength tests and yield strength tests at 1,000 psi confining pressure were conducted and Young's Moduli and Poisson's ratios were determined. The results of the tests and determinations are set forth in Table IVB below.

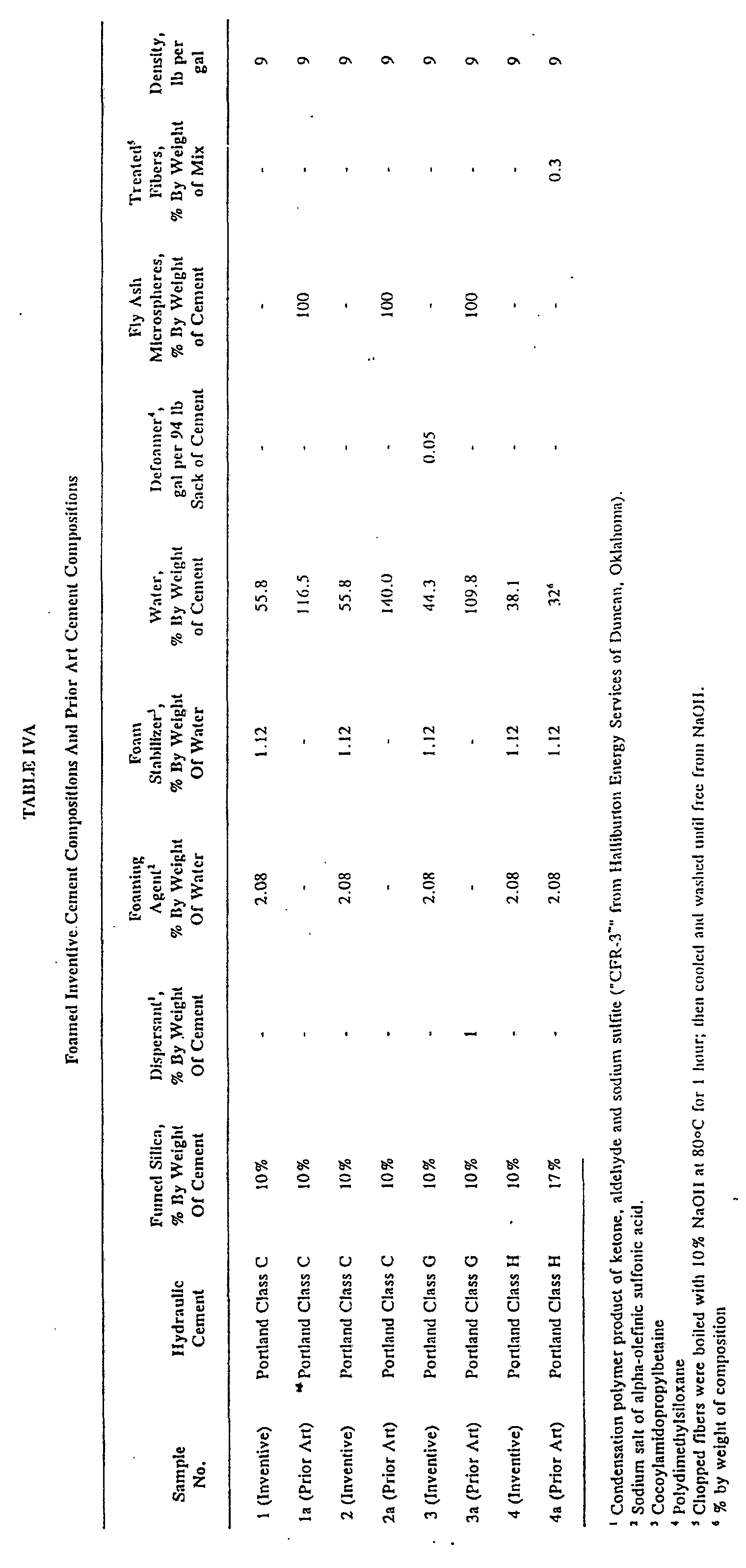

**TABLE IVB**

| **Comparative Test Results** | | | | | |
|---|---|---|---|---|---|
| **Sample No.** | **Unconfined Compressive Strength, psi** | **Tensile Strength, psi** | **Yield Strength at 1000 psi Confining Pressure, psi** | **Young's Modulus, psi x 10**^{**-6**} | **Poisson's Ratio** |
| 1 (Inventive) | 280 | 136 | 1325 | 0.013±0.0035 | 0.102835±0.018011 |
| 1a (Prior Art) | 1092 | 133 | 1800 | 0.139±0.0029 | 0.019314±0.005359 |
| 2 (Inventive) | 280 | 136 | 1325 | 0.013±0.0029 | 0.019314±0.018011 |
| 2a (Prior Art) | 1260 | 175 | 2300 | 0.130±0.0026 | 0.081631±0.009028 |
| 3 (Inventive) | 282 | 109 | 1300 | 0.019±0.0032 | 0.225041±0.024208 |
| 3a (Prior Art) | 347 | 140 | 1500 | 0.077±0.00085 | 0.106248±0.025618 |
| 4 (Inventive) | 219 | 97 | 1275 | 0.026±0.0021 | 0.084400±0.006213 |
| 4a (Prior Art) | 350 | 125 | 2400 | 0.028±0.0001 | 0.141158±0.000791 |

From the results set forth in Table IVB and particularly the Young's moduli, it can be seen that the foamed compositions of this invention comprised of hydraulic cement, fumed silica, water, air, a foaming agent and a foam stabilizer have unexpected and surprisingly improved ductility and resiliency properties as compared to the prior art compositions tested.

## Claims

1. A well cement composition having improved mechanical properties including elasticity and ductility and having a Young's modulus of no more than 0.026 x 10⁻⁶ psi, which composition comprises a hydraulic cement; fumed silica present in an amount of from 5% to 30% by weight of hydraulic cement in said composition; sufficient water to form a pumpable slurry; a gas present in an amount sufficient to foam said cement composition; an effective amount of a foaming agent; and an effective amount of a foam stabilizer.

2. A composition according to claim 1, wherein said hydraulic cement is Portland cement.

3. A composition according to claim 1 or 2, wherein said water is present in an amount of from 22% to 95% by weight of hydraulic cement in said composition.

4. A composition according to claim 1, 2 or 3, wherein said gas is air or nitrogen and is present in said composition in an amount to produce a cement composition density of from 8 to 16 pounds per U.S. gallon.

5. A composition according to any of claims 1 to 4, wherein said foaming agent is comprised of the sodium salt of alpha-olefinic sulfonic acid and is present in an amount of from 4% to 9.5% by weight of water in said composition.

6. A composition according to any of claims 1 to 5, wherein said foam stabilizer is comprised of an amidopropylbetaine of the formula:
R - CONHCH₂CH₂CH₂N⁺(CH₃)₂CH₂CO₂⁻
wherein R is a C₁₀ -C₁₈ saturated aliphatic hydrocarbon group, an oleyl group or a linoleyl group, and is present therein in an amount of from 2% to 5% by weight of water in said composition.

7. A composition according to claim 6, wherein the foam stabilizer is comprised of cocoylamidopropylbetaine.

8. A composition according to claim 7, which further comprises an effective amount of a dispersing agent comprised of the condensation polymer product of a ketone, an aldehyde and sodium sulfite.

9. A method of cementing in a subterranean well, which comprises introducing a cement composition as claimed in any of claims 1 to 8, and allowing said cement composition to set in said well.

## Patentansprüche

1. Eine Bohrlochzementmischung mit verbesserten mechanischen Eigenschaften wie Elastizität und Dehnbarkeit sowie mit einem Youngschen Modulus von nicht mehr als 0,026 x 10⁻⁶ psi. Diese Zusammensetzung enthält: hydraulischen Zement; Rauchgas-Siliziumoxid-Anteil von 5 bis 30 Prozent des Massenanteils des hydraulischen Zements in besagter Mischung; ausreichend Wasser zur Bildung einer pumpengängigen Aufschlämmung; ein Gas in ausreichender Menge zum Aufschäumen besagter Zementmischung; eine wirksame Menge Aufschäummittel, und eine wirksame Menge Schaumstabilisierer.

2. Eine Mischung gemäß Anspruch 1, wobei Portlandzement als hydraulischer Zement verwendet wird.

3. Eine Mischung gemäß Anspruch 1 oder 2 mit einem Wasseranteil von 22 bis 95 Prozent des Massenanteils des hydraulischen Zements.

4. Eine Mischung gemäß Anspruch 1, 2 oder 3, wobei Luft oder Stickstoff als Gas in ausreichender Menge zur Erzeugung einer Zementdichte von 959 bis 1918 kg/m³ (8 bis 16 US-Pfund pro US-Gallone) verwendet wird.

5. Eine Mischung gemäß jeglicher Ansprüche von 1 bis 4, wobei als Aufschäummittel das Natriumsalz der alpha-olefinischen Sulfonsäure mit einem Massenanteil von 4 bis 9,5 Prozent des Wassergewichts in besagter Mischung verwendet wird.

6. Eine Mischung gemäß jeglicher Ansprüche von 1 bis 5, wobei als Schaumstabilisierer ein Amidopropylbetain der Formel:
R - CONHCH₂CH₂CH₂CH₂N⁺(CH₃)₂CH₂CO₂⁻
wobei R eine C₁₀-C₁₈-gesättigte aliphatische Kohlenwasserstoffgruppe, eine Oleyl- oder eine Linoleyl-Gruppe mit einem Anteil von 2 bis 5 Prozent des Wasseranteils in besagter Mischung ist.

7. Eine Mischung gemäß Anspruch 6, wobei der Schaumstabilisierer aus Cocoylamidopropylbetain besteht.

8. Eine Mischung gemäß Anspruch 7 mit einer wirksamen Menge aus dem Kondensationspolymer eines Ketons, einem Aldehyd und Natriumsulfit bestehenden Dispersierungsmittel.

9. Ein Verfahren zum Zementieren in einem unterirdischen Bohrloch, das die Einbringung einer Zementmischung gemäß jeglicher Ansprüche von 1 bis 8 umfasst und das Abbinden besagter Zementmischung in besagtem Bohrloch ermöglicht.

## Revendications

1. Une composition de cimentation pour puits ayant des propriétés mécaniques perfectionnées, y compris l'élasticité et la ductilité, et ayant un module de Young maximum de 0,026 x 10⁻⁶ psi, ladite composition comportant un ciment hydraulique ; de la fumée de silice présente en une quantité de 5% à 30% en poids du ciment hydraulique dans ladite composition ; de l'eau en quantité suffisante pour former un coulis pompable ; un gaz présent en une quantité suffisante pour faire mousser ladite composition de ciment ; une quantité efficace d'un agent moussant ; et une quantité efficace d'un stabilisateur de mousse.

2. Une composition selon la revendication 1, dans laquelle ledit ciment hydraulique est du ciment Portland.

3. Une composition selon la revendication 1 ou 2, dans laquelle ladite eau est présente en une quantité de 22% à 95% en poids du ciment hydraulique dans ladite composition.

4. Une composition selon la revendication 1, 2 ou 3, dans laquelle ledit gaz est l'air ou l'azote et est présent dans ladite composition en une quantité permettant de produire une densité de composition de ciment de 8 à 16 pounds par gallon U.S.

5. Une composition selon l'une quelconque des revendications 1 à 4, dans laquelle ledit agent moussant se compose du sel de sodium de l'acide sulfonique alpha-oléfinique et est présent en une quantité de 4% à 9,5% en poids de l'eau dans ladite composition.

6. Une composition selon l'une des revendications 1 à 5, dans laquelle ledit stabilisateur de mousse se compose d'une amidopropylbétaïne ayant la formule :
R - CONHCH₂CH₂CH₂N⁺(CH₃)₂CH₂CO₂⁻
dans laquelle R est un groupe hydrocarbure aliphatique saturé C₁₀C₁₈, un groupe oléyle ou un groupe linoléyle, et est présent dans la composition en une quantité de 2% à 5% en poids de l'eau dans ladite composition.

7. Une composition selon la revendication 6, dans laquelle le stabilisateur de mousse se compose de cocoylamidopropylbétaïne.

8. Une composition selon la revendication 7, qui comporte de plus une quantité efficace d'un agent de dispersion qui se compose du produit polymère de condensation d'une cétone, d'un aldéhyde et de sulfite de sodium.

9. Un procédé de cimentation dans un puits souterrain, qui comporte l'introduction d'une composition de ciment selon l'une quelconque des revendications 1 à 8, et la prise naturelle de ladite composition de ciment dans ledit puits.
